# FASCICULE DE BREVET EUROPEEN

(11) **EP 2 133 239 B1**
(45) Date de publication et mention de la délivrance du brevet: **29.02.2012**
(21) Numéro de dépôt: 09161230.9
(22) Date de dépôt: 27.05.2009
(51) Int. Cl.: B60R 5/04, B60J 1/20, B60J 7/00

(54) **Dispositif d'occultation pour véhicule automobile à tubes enrouleurs débrayables, et véhicule automobile correspondant**
Beschattungsvorrichtung für Kraftfahrzeug mit entkuppelbaren Aufrollrohren und entsprechendes Kraftfahrzeug
Shading device for an automobile with declutching winding tubes, and corresponding motor vehicle

(30) Priorité: 13.06.2008 FR 0853947
(43) Date de publication de la demande: 16.12.2009
(73) Titulaire: Advanced Comfort Systems France SAS - ACS France, 79300 Bressuire (FR)
(72) Inventeur: Jincheleau, Michel, 79320 Moncoutant (FR); Violleau, Christian, 79330 Glenay (FR)
(74) Mandataire: Bioret, Ludovic

(56) Documents cités:
- EP-A- 1 852 289
- EP-A- 1 852 293
- FR-A- 2 873 339
- US-B1- 6 948 766

## Description

### 1. Domaine de l'invention

Le domaine de l'invention est celui des équipements pour véhicules automobiles. Plus précisément, l'invention concerne l'occultation des surfaces d'un véhicule automobile. Elle concerne en particulier les cache-bagages, mais également les stores occultants des surfaces vitrées ou les ouvertures, comme les stores de toit, les stores de hayon et les stores de pare-brise, les coupe-vents, et tous les systèmes similaires pouvant mettre en oeuvre plusieurs, et classiquement deux, toiles ou écrans amovibles.

### 2. Solutions de l'art antérieur

On connaît de nombreuses solutions de systèmes d'occultation pour les véhicules automobiles. Ces systèmes d'occultation sont souvent constitués de toiles d'occultation qui sont montées sur un tube enrouleur placé dans une cassette ou boîtier.

Dans certains cas, cette cassette peut être amovible. C'est souvent le cas, notamment, des cassettes de cache-bagages ou des cassettes de stores de pare-brise. Ces cassettes peuvent ainsi être stockées dans le véhicule (ou à l'extérieur de celui-ci) quand elles ne sont pas utilisées.

Un inconvénient de cette solution est que ces cassettes sont de dimensions importantes. En effet, les stores ou toiles d'occultation qu'elles comprennent présentent généralement une largeur proche de la largeur du véhicule, de façon à couvrir toute la surface du coffre, du pare-brise, ou du pavillon du véhicule. Il est donc difficile de trouver dans le véhicule un emplacement pratique de stockage de ces cassettes de grande longueur.

Des cassettes pliantes ont été envisagées pour répondre à ce problème. Ces cassettes contiennent deux tubes enrouleurs qui sont alignés, dans leur position d'utilisation, pour permettre de déployer deux toiles parallèlement. La cassette, une fois pliée, présente une longueur presque deux fois moins importante que si elle ne contenait qu'une seule toile couvrant la même surface.

La Demanderesse a proposé, dans le document de brevet EP-1 852 289, un dispositif d'occultation de ce type, comprenant deux toiles enroulées sur des tubes enrouleurs de façon indépendantes. Selon la technique décrite, les bords voisins des deux toiles sont solidarisables au fur et à mesure de leur déploiement. Ces toiles peuvent donc être reliées, ou solidarisées l'une à l'autre sur leurs parties déployées, de façon à supprimer tout espace ou fente entre elles, alors que leurs parties enroulées ne le sont pas.

Dans un mode de réalisation de cette demande, un mécanisme de jonction ou d'assemblage des toiles de type fermeture à glissière est prévu.

Un tel dispositif permet de conserver la qualité d'occultation d'une toile unique, tout en rendant possible de nombreuses applications, telles que le pliage de la cassette.

Cependant, un tel dispositif nécessite qu'il n'y ait pas de décalage entre les toiles lorsque celles-ci sont déployées, et par conséquent entre les barres de tirage, en particulier lorsque les barres de tirage sont jointes par leur extrémité.

En outre, lorsque chaque toile est repliée autour du tube enrouleur correspondant, les mouvements éventuels des toiles et des tubes enrouleurs à l'intérieur des cassettes sont sources de bruits qui peuvent être gênants dans le cas d'une utilisation dans un véhicule, et peuvent éventuellement conduire à une détérioration du dispositif d'occultation.

Ces problèmes peuvent se poser également dans d'autres cas, même lorsqu'il n'y a pas de moyens de solidarisation des toiles.

Ces inconvénients sont difficilement acceptables sur les véhicules, notamment sur des véhicules haut de gamme.

### 3. Objectifs de l'invention

L'invention a notamment pour objectif de pallier ces inconvénients de l'art antérieur.

Plus précisément, un objectif de l'invention est, selon au moins un mode de réalisation, de fournir une solution efficace de système d'occultation comprenant plusieurs toiles dans une même cassette (ou dans un dispositif à deux demi-cassettes).

Un autre objectif de l'invention est, selon au moins un mode de réalisation, de fournir une telle technique permettant d'optimiser le déploiement et le reploiement des toiles.

Encore un autre objectif de l'invention, selon au moins un mode de réalisation, est de ne pas avoir de décalage entre les toiles lorsque celles-ci sont déployées, et par conséquent entre les barres de tirage, particulièrement lorsque les barres de tirage doivent être assemblées, et encore plus particulièrement lorsque les toiles doivent être solidarisées lors de leur déploiement.

Un objectif supplémentaire est, selon au moins un mode de réalisation, d'éviter ou à tout le moins réduire les bruits dus aux mouvements des tubes enrouleurs et des toiles lorsque celles-ci sont enroulées ainsi que les éventuelles détériorations du dispositif d'occultation en position pliée.

Pour au moins certains modes de réalisation particuliers, l'invention a également pour objectif de fournir une solution de cassette pliante pour de tels stores qui soit particulièrement simple à mettre en oeuvre, fiable et efficace.

### 4. Exposé de l'invention

Ces objectifs, ainsi que d'autres qui apparaîtront par la suite, sont atteints à l'aide d'un dispositif d'occultation d'une surface d'un véhicule automobile, comprenant deux toiles d'occultation montées chacune sur un tube enrouleur porté par un boîtier, lesdits boîtiers étant articulés de façon à prendre au moins deux positions :
- une position de rangement, dans laquelle lesdits boîtiers sont repliés l'un contre l'autre, lesdits tubes enrouleurs définissant un angle de l'ordre de 0° ; et
- une position de travail, dans laquelle lesdits tubes enrouleurs sont sensiblement alignés, définissant un angle de l'ordre de 180°,

Selon l'invention, un tel dispositif d'occultation comprend des moyens de verrouillage de la rotation desdits tubes enrouleurs, bloquant la rotation desdits tubes enrouleurs lorsque le dispositif est dans ladite position de rangement, et des moyens de libération agissant sur lesdits moyens de verrouillage pour permettre la rotation desdits tubes enrouleurs, actionnés ou actionnables lorsque ledit dispositif est dans ladite position de travail.

Ainsi, l'invention met en oeuvre des moyens de verrouillage de tubes enrouleurs de store dont les boîtiers respectifs sont articulés l'un par rapport à l'autre. Les boîtiers peuvent prendre au moins deux positions, à savoir une position de travail dans laquelle les boîtiers sont alignés de façon à ce que les stores/toiles puissent être déployées dans un même plan, et une position de rangement, dans laquelle les boîtiers sont ramenés sensiblement l'un contre l'autre (l'un des boîtiers bascule alors d'un angle de 180° autour de l'articulation située entre les deux boîtiers).

L'expression « de l'ordre de 180° » doit ici s'entendre ici comme valant 180° (les deux boîtiers étant alors alignés), ou légèrement plus de 180° ou légèrement moins de 180°, de façon que les toiles déployées présentent un galbe si ceci est nécessaire.

Ces moyens de verrouillage empêchent la rotation (ou bloquent la rotation) des tubes enrouleurs dans la position de rangement (les boîtiers étant alors pliés) et limitent également les bruits dus aux mouvements des tubes enrouleurs et des toiles dans les boîtiers, ainsi que les risques d'endommagement du dispositif d'occultation.

En outre, des moyens de libération des moyens de verrouillage sont prévus afin de permettre la rotation des tubes enrouleurs dans la position de travail (les boîtiers étant dépliés et sensiblement alignés).

Généralement, les moyens de verrouillage resteront actifs dans les positions intermédiaires entre la position de rangement et la position de travail.

Une telle approche évite ainsi tout décalage entre les toiles, et éventuellement entre les barres de tirage, lorsque les toiles sont déployées. Ceci est particulièrement avantageux lorsque les barres de tirage doivent être jointes à leur extrémité, mais également lorsque les toiles doivent être solidarisées.

Dans un mode de réalisation particulier de l'invention, les moyens de verrouillage comprennent, pour chacun desdits tubes enrouleurs, au moins une première pièce de verrouillage solidaire dudit tube enrouleur, apte à venir en prise avec une seconde pièce solidaire dudit boîtier.

Ainsi, le verrouillage des tubes enrouleurs est mis en oeuvre par une première pièce de verrouillage fixée à chaque tube enrouleur et apte à coopérer avec une seconde pièce complémentaire fixée au boîtier correspondant.

Un tel verrouillage est simple à mettre en oeuvre, efficace et peu coûteux.

Dans un autre mode de réalisation particulier de l'invention, les moyens de libération agissent sur ladite première ou ladite seconde pièce de verrouillage, de façon à la décaler parallèlement à l'axe de rotation dudit tube enrouleur.

Ainsi, le déverrouillage de la rotation des tubes enrouleurs est effectué par des moyens de libération qui peuvent, au choix, décaler la première pièce de verrouillage fixée à chaque tube enrouleur ou la seconde pièce complémentaire fixée au boîtier parallèlement à l'axe de rotation du tube enrouleur.

Cette approche permet de contrôler de manière simple le verrouillage/déverrouillage des stores.

Deux variantes pourront être envisagées concernant le montage de la seconde pièce de verrouillage sur le boîtier.

Selon un premier mode de réalisation avantageux, la seconde pièce est montée fixe sur ledit boîtier, lesdits tubes enrouleurs étant mobiles parallèlement à leur axe de rotation.

Ainsi, le déplacement des tubes enrouleurs parallèlement à leur axe de rotation entraîne le déverrouillage de leur rotation. Une telle mise en oeuvre permet de maintenir la compacité du dispositif d'occultation.

A l'inverse, selon un second mode de réalisation, la seconde pièce est montée mobile sur ledit boîtier.

Dans cette alternative, le déplacement de la seconde pièce complémentaire fixée au boîtier entraîne le déverrouillage de la rotation des tubes enrouleurs.

Préférentiellement, les toiles portent des moyens de solidarisation complémentaires susceptibles de se solidariser l'un à l'autre pour assurer une jonction progressive desdites toiles lors de leur déploiement.

Ainsi, les toiles d'occultation intègrent des moyens de solidarisation réversible, par exemple de type fermeture à glissière, permettant de joindre les deux bords voisins des toiles au fur et à mesure de leur déploiement.

On conserve ainsi la qualité d'occultation d'une toile unique, tout en rendant possible de nombreuses applications, telles que le pliage des boîtiers.

De manière avantageuse, les moyens de solidarisation appartiennent au groupe comprenant :
- les fermetures à glissière ;
- les boutons pression ;
- les moyens aimantés.

Dans un mode de mise en oeuvre de l'invention, le dispositif d'occultation comprend des moyens d'initialisation de la solidarisation desdites toiles, et les moyens d'initialisation coopèrent avec lesdits moyens de libération, de façon que l'initialisation de la solidarisation assure le déverrouillage de la rotation desdits tubes enrouleurs.

L'invention prévoit ainsi que les stores ne puissent être déverrouillés que lorsque des moyens d'initialisation de la solidarisation des toiles activent les moyens de libération du verrouillage de la rotation des tubes enrouleurs.

Une telle approche permet de s'assurer que le déploiement des toiles n'est possible que lorsque les toiles sont correctement alignées et solidarisées, ce qui évite toute mauvaise utilisation/manipulation du dispositif d'occultation.

Dans un autre mode de mise en oeuvre de l'invention, les moyens de solidarisation comprennent une fermeture à glissière et les moyens d'initialisation comprennent un curseur porté par l'une desdites toiles ou une barre de tirage solidaire de celle-ci, et mobile entre une position inactive et une position de solidarisation, lesdits moyens de jonction assurant :
- une phase d'initialisation de la jonction, assurée par le déplacement de ladite position inactive vers ladite position de solidarisation, et
- une phase de poursuite de la jonction, assurée par le déroulement desdites toiles, ledit curseur restant immobile par rapport au(x)dit(s) tube(s) enrouleur(s), dans ladite position de solidarisation.

Ainsi, la jonction des toiles enroulées sur des tubes enrouleurs distincts est amorcée par le déplacement d'un curseur porté par l'une des toiles d'une position inactive à une position de solidarisation. Une fois le curseur en position de solidarisation, le curseur reste immobile et les toiles peuvent être déployées, le curseur assurant ensuite la jonction progressive des toiles sur leurs parties déployées.

L'opération peu aisée de l'initialisation de la jonction est assurée, selon l'invention, par le curseur, monté de façon à pouvoir se déplacer de la position inactive à la position de solidarisation.

On dispose ainsi d'un système simple et efficace, dans lequel l'utilisateur peut dans un premier temps, par l'intermédiaire d'un curseur mobile, joindre le bord des toiles et déployer ensuite les toiles par le biais des barres de tirage, le curseur assurant la jonction progressive des toiles déployées.

La solidarisation se décompose en deux phases, une première d'initialisation, supposant un déplacement du curseur, puis une phase de poursuite de la jonction pendant laquelle ce curseur est immobile.

On notera que, dans au moins un mode de réalisation, les moyens de solidarisation et les moyens de jonction forment une fermeture à glissière. Bien sûr de nombreux autres moyens de solidarisation progressive et réversible connus peuvent être adaptés et mis en oeuvre.

De manière préférentielle, les moyens de jonction portent au moins une tige, formant lesdits moyens de libération.

Dans ce cas, les moyens de jonction peuvent comprendre un élément en forme de tige agissant sur les moyens de verrouillage de la rotation des tubes enrouleurs dans la position de solidarisation.

Le verrouillage / déverrouillage des tubes enrouleurs est donc fonction de la position du curseur. Dans la position inactive du curseur, les stores ne peuvent pas être déployés alors que dans la position de solidarisation du curseur, les stores peuvent être déroulés.

Dans un mode de réalisation de l'invention, les moyens de libération sont portés par lesdits boîtiers, et assurent le déverrouillage de moyens de verrouillage dès que lesdits boîtiers sont dans ladite position de travail.

Une telle approche assure un déverrouillage automatique de la rotation des tubes enrouleurs par les boîtiers. Un des boîtiers au moins peut par exemple porter un ergot qui assure le décalage des tubes enrouleurs parallèlement à leur axe de rotation lorsque les boîtiers sont dans la position de travail (c'est-à-dire dépliés et sensiblement alignés). Un tel dispositif est simple d'utilisation et assure que les stores ne pourront être déployés que lorsque les boîtiers sont correctement alignés.

Parmi les différentes applications de l'invention, on peut notamment citer :
- les cache-bagages ;
- les stores de compartimentage de coffre ;
- les stores d'occultation de pavillon ;
- les stores d'occultation de lunette arrière ;
- les stores d'occultation de pare-brise ;
- les stores de protection extérieure ou intérieure de pare-brise ;
- les dispositifs coupe-vent.

L'invention concerne également les véhicules automobiles comprenant au moins un dispositif d'occultation tel que décrit ci-dessus.

### 6. Liste des figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 présente un dispositif d'occultation selon un premier mode de réalisation de l'invention, en cours de déploiement ;
- la figure 2 présente le dispositif d'occultation de la figure 1 dans une position partiellement pliée ;
- la figure 3 est une vue de détail du curseur des moyens de jonction du dispositif d'occultation de la figure 1 selon un mode de réalisation;
- la figure 4 est une vue partielle du dispositif d'occultation de la figure 1 montrant les moyens de jonction de la figure 3, dans une position inactive ;
- la figure 5 est une vue partielle du dispositif d'occultation de la figure 1 montrant les moyens de jonction de la figure 3, dans une position de solidarisation ;
- la figure 6 est une vue de détail de l'élément d'arrêt des moyens de jonction du dispositif d'occultation de l'invention selon un mode de réalisation ;
- les figures 7 et 8 sont des vues schématiques des moyens de jonction et des moyens de solidarisation du dispositif d'occultation;
- la figure 9 est une autre vue partielle du dispositif d'occultation dans une position partiellement pliée montrant les moyens de jonction et les moyens de solidarisation des figures 7 et 8 ;
- les figures 10, 11 et 12 représentent partiellement l'initialisation de la jonction des moyens de solidarisation par les moyens de jonction;
- les figures 13A et 13B sont deux vues partielles des moyens de jonction et de solidarisation en position de verrouillage du dispositif d'occultation ;
- les figures 14A et 14B sont deux vues schématiques des moyens de jonction et de solidarisation en position de déverrouillage du dispositif d'occultation ;
- les figures 15 et 16 sont deux vues schématiques d'un tube enrouleur du dispositif d'occultation respectivement en position de verrouillage et de déverrouillage du dispositif d'occultation ;
- les figures 17 et 18 sont deux vues schématiques des moyens de libération de la rotation des tubes enrouleurs du dispositif d'occultation.

### 6. Description détaillée de l'invention

### 6.1 Rappel du principe de l'invention

Le principe général de l'invention s'applique aux dispositifs d'occultation qui comprennent deux boîtiers articulés l'un par rapport à l'autre et contenant chacun un tube enrouleur sur lequel est montée une toile d'occultation.

L'invention repose sur l'utilisation de moyens de verrouillage de la rotation des tubes enrouleurs de store. Ces moyens de verrouillage empêchent la rotation des tubes enrouleurs dans la position de rangement des boîtiers (boîtiers pliés).

En outre, des moyens de libération des moyens de verrouillage sont prévus afin de permettre la rotation des tubes enrouleurs dans la position de travail (boîtiers dépliés et sensiblement alignés) et donc le déploiement des toiles.

Une telle approche limite les risques de décalage des toiles lorsque celles-ci sont déployées et évite en outre tout endommagement du dispositif d'occultation en position rangée.

### 6.2 Présentation d'un premier mode de réalisation

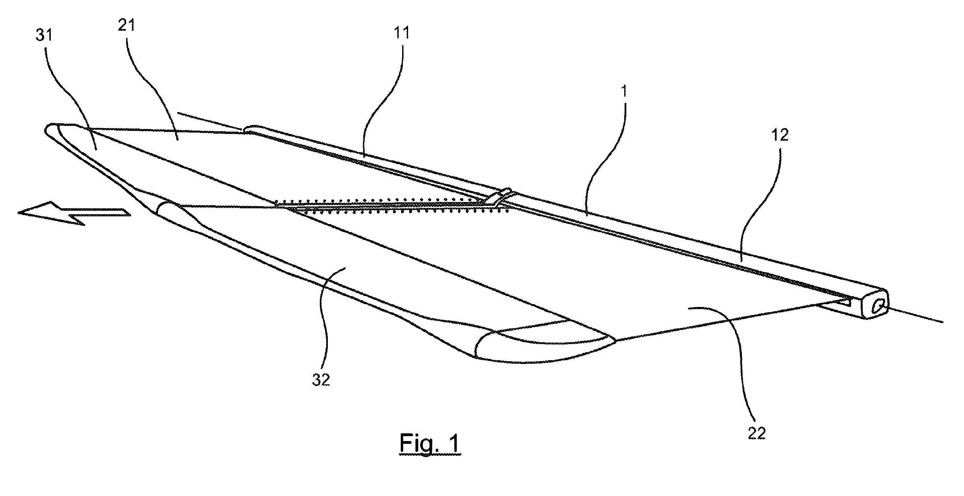

Les figures 1 à 12 illustrent un système, ou dispositif, d'occultation selon un mode de réalisation de l'invention. La figure 1 présente ce système dans une position d'utilisation. Ce système d'occultation comprend une cassette 1 composée de deux demi-cassettes (ou boîtiers) 11 et 12 articulées l'une par rapport à l'autre. Chacune de ces demi-cassettes, respectivement 11 et 12, comprend un tube enrouleur (non représenté), sur lequel est montée une toile d'occultation (ou store), respectivement 21 et 22. Des barres de tirage, respectivement 31 et 32, sont solidaires de l'extrémité de chacune des toiles 21 et 22.

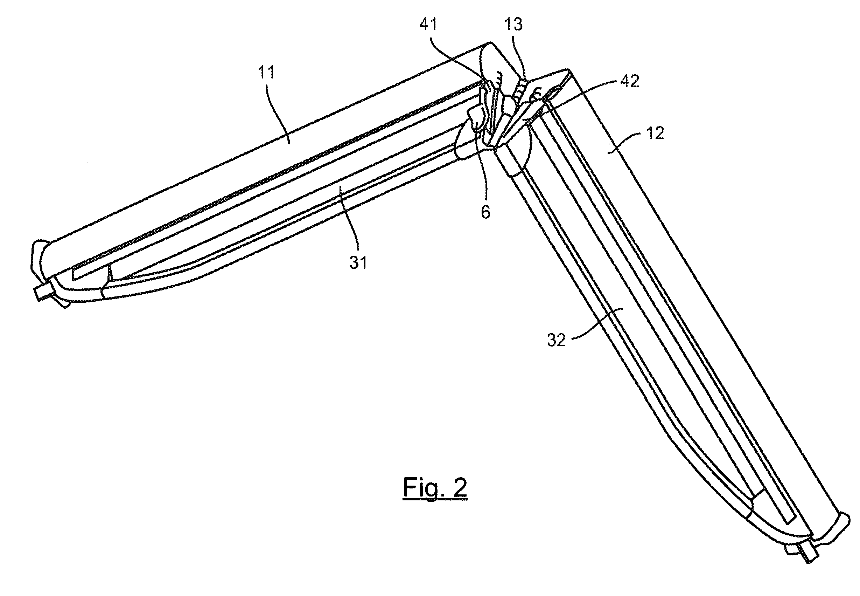

La cassette 1 est ainsi une cassette pliable, qui peut donc être entreposée, dans le véhicule notamment, beaucoup plus facilement qu'une cassette en une seule partie. Les deux demi-cassettes 11 et 12 peuvent pivoter l'une par rapport à l'autre grâce à une charnière 13, qui est représentée avec les demi-cassettes 11 et 12 partiellement repliées sur la figure 2. Normalement, les toiles 21 et 22 sont enroulées complètement lorsque le dispositif est plié.

Dans la position d'utilisation du dispositif, comme illustré figure 1, les tubes enrouleurs sont alignés, et les barres de tirage 31 et 32 peuvent être jointes par leur extrémité. Il est possible de tirer sur les barres de tirage (ou la barre de tirage globale formée par leur solidarisation) pour déployer les toiles 21 et 22. Ces deux toiles d'occultation se déploient alors parallèlement. Pour éviter qu'un jour apparaisse entre les bords des deux toiles d'occultation 21 et 22, au niveau du milieu de la cassette 1, un mécanisme de solidarisation réversible des toiles est prévu.

### 6.3 Exemple de moyens de solidarisation pour ce premier mode de réalisation

Ce mécanisme de solidarisation réversible comprend notamment des moyens de solidarisation 41 et 42 complémentaires montés sur le bord de chacune des toiles 21 et 22. Des moyens de jonction 6, situés à proximité des tubes enrouleurs, sont en outre prévus pour solidariser entre eux, de façon réversible, les éléments de solidarisation 41 et 42.

Selon un mode de réalisation préférentiel, les moyens de solidarisation 41 et 42 et les moyens de jonction 6 forment une fermeture à glissière.

Les moyens de solidarisation 41 et 42 peuvent être sous la forme classique d'une rangée de dents (espacées de préférence à intervalles réguliers) montées sur le bord de chacune des toiles 21 et 22 et susceptibles de s'engrener l'une dans l'autre.

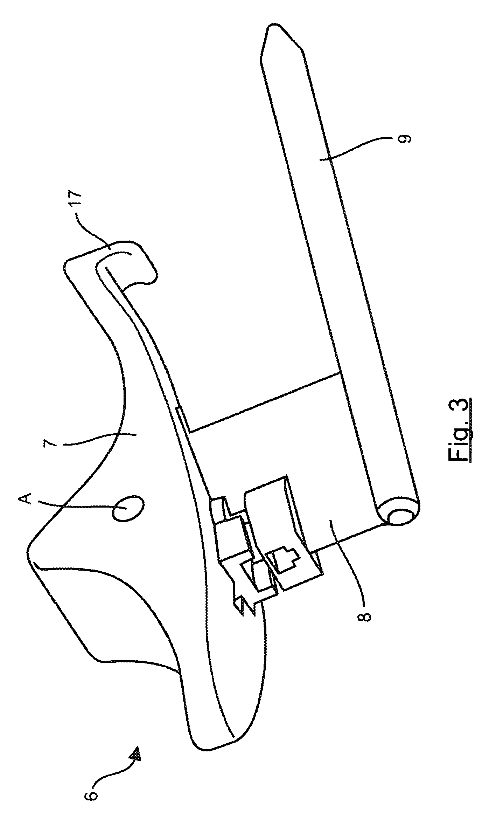

Dans un mode de réalisation, les moyens de jonction 6 comprennent un curseur 8 qui est porté par l'une des toiles 21, 22 ou une des barres de tirage 31, 32. Comme illustré figure 3, le curseur 8 comprend un élément d'actionnement 7 dont une des extrémités comprend des moyens d'accrochage à au moins un des tubes enrouleurs et/ou à un boîtier 11, 12 contenant au moins un des tubes enrouleurs.

Dans ce mode de réalisation, les moyens d'accrochage se présentent sous la forme d'un crochet 17 recourbé vers l'intérieur. L'élément d'actionnement 7 est monté mobile autour d'un pivot/axe A du curseur 8. L'élément d'actionnement 7 peut ainsi être percé de deux trous débouchant qui sont axialement alignés, dans lesquels deux pattes du curseur 8 peuvent se loger.

Le curseur 8 comprend de manière classique deux canaux de guidage permettant le passage des rangées de dents des moyens de solidarisation 41 et 42.

De manière connue, l'élément d'actionnement 7 est destiné à faciliter la manipulation et le mouvement de va-et-vient du curseur 8, et ainsi à ouvrir ou fermer la fermeture à glissière.

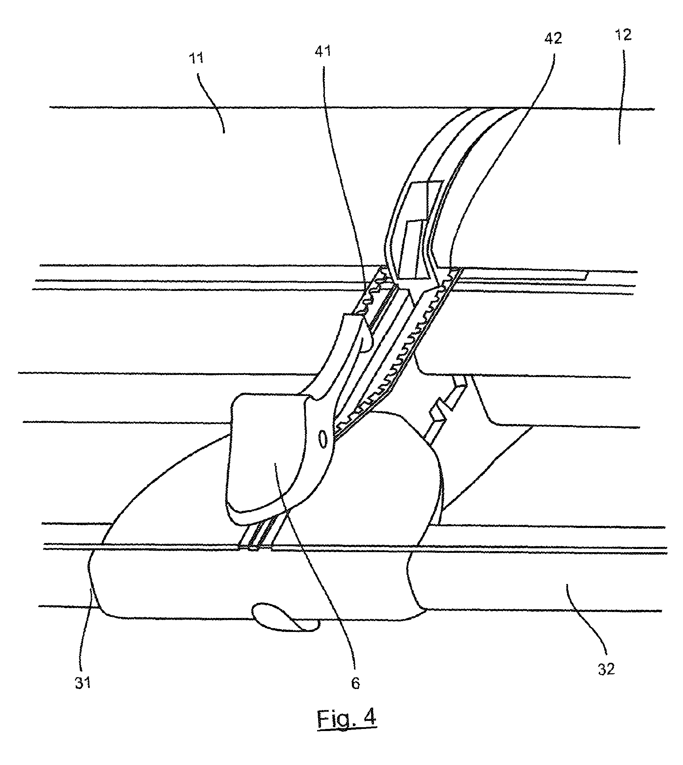

La figure 4 montre le curseur 8 dans une position inactive, les deux demi-cassettes 11, 12 portant les tubes à enrouleur étant alignés et l'amorçage de la solidarisation des toiles ayant été effectué (un exemple de moyens d'amorçage de la solidarisation sera décrit plus en détail par la suite). En d'autres termes, les moyens de solidarisation 42 situés à l'extrémité de la barre de tirage 32 sont situés dans un des canaux de guidage du curseur 8, et les moyens de solidarisation 41 sont situés dans l'autre canal de guidage du curseur 8.

Il est nécessaire, avant de pouvoir déployer les toiles 21 et 22 du store, d'initialiser la jonction des deux bords voisins des toiles d'occultation 21 et 22. Pour ce faire, le curseur 8 doit être manuellement déplacé en translation par l'utilisateur vers la cassette 1, par le biais de l'élément d'actionnement 7, ce qui permet l'initialisation de la jonction des moyens de solidarisation 41 et 42.

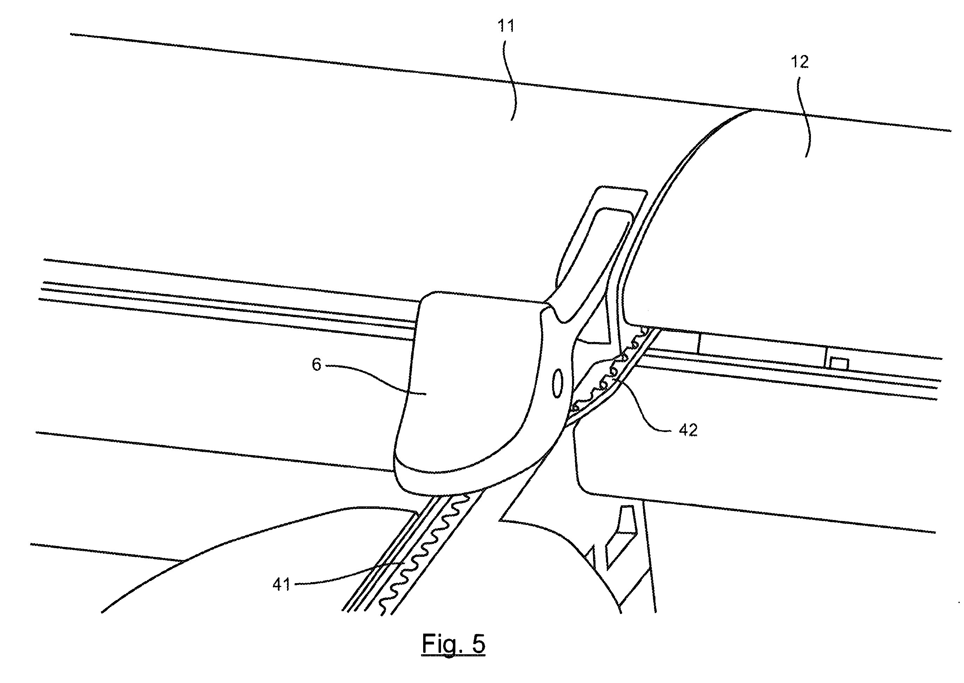

La figure 5 montre le curseur 8 dans une position de solidarisation où il est engagé dans la charnière 13 par l'intermédiaire du crochet 17 qui est retenu par des moyens de réception du crochet 17 situés sur au moins une des demi-cassettes 11, 12. On distingue clairement les moyens de solidarisation 41, 42 des deux toiles qui sont engrenés, ou engagés, l'un dans l'autre.

### 6.4 Exemple de moyens de libération pour ce premier mode de réalisation

Le curseur 8 comprend des moyens de libération de la rotation des tubes enrouleurs sous la forme d'une tige ou d'un doigt 9. Dans la position de solidarisation du curseur illustrée sur la figure 5, les tubes enrouleurs sont déverrouillés par la tige 9 du curseur 8 et l'utilisateur peut déployer les toiles 21 et 22 en tirant sur les barres de tirage 31, 32 (flèche F). Il est préférable que la charnière des demi-cassettes soit bloquée lorsque le curseur 8 est en position de solidarisation afin d'éviter le pliage intempestif de ces cassettes.

Au fur et à mesure du déploiement des toiles, le curseur 8, qui reste immobile dans la charnière 13 par rapport aux tubes enrouleurs, assure la jonction (ou engrenage, ou rassemblement) progressive des toiles 21 et 22 au niveau de la sortie des demi-cassettes 11 et 12 contenant chacune un tube à enrouleur. En d'autres termes, le curseur rassemble les moyens de solidarisation 41 et 42 fixés aux bords des toiles 21 et 22, et les solidarise. Seules les parties déployées des toiles 21 et 22 sont donc solidarisées, les parties de ces toiles qui sont enroulées sur les tubes enrouleurs restant indépendantes l'une de l'autre.

Lors du repli, le curseur 8 assure la séparation des deux toiles 21 et 22.

Une fois les toiles 21 et 22 repliées sur les tubes enrouleurs à l'intérieur des boîtiers, le curseur peut être désolidarisé du ou des tubes enrouleurs et/ou d'un boîtier contenant au moins un des tubes. La désolidarisation est effectuée en actionnant l'élément d'actionnement 7 de manière à le faire pivoter autour de l'axe A et ainsi de libérer le crochet 17 des moyens de réception du crochet situés dans la charnière 13. Les tubes enrouleurs sont alors verrouillés et les stores ne peuvent donc plus être déployés. Les deux demi-cassettes 11, 12 peuvent en outre être pliées afin par exemple de ranger le dispositif d'occultation dans le coffre d'un véhicule.

Les barres de tirage 31, 32 peuvent être jointes par leur extrémité par un mécanisme de jonction comprenant par exemple un doigt (non représenté) monté mobile sur la barre de tirage 32, pouvant pénétrer dans un logement (non représenté) dans la barre de tirage 31. Le mouvement du doigt peut être contrôlé par une commande sur la barre de tirage 32.

Pour que les bords des toiles d'occultation 21 et 22 puissent être jointifs, les toiles peuvent être au moins partiellement élastique. Ainsi, une bande de toile élastique peut être cousue sur le bord des toiles d'occultation 21 et 22 et porte les moyens de solidarisation 41 et 42. Les bords des toiles peuvent ainsi se déformer pour se rapprocher l'un de l'autre.

Dans certains cas, en position d'utilisation, les deux tubes enrouleurs peuvent ne pas être complètement alignés, par exemple lorsqu'un effet de galbe est souhaité. En outre, les deux demi-cassettes 11 et 12 peuvent être verrouillées l'une à l'autre par leur extrémité dans la position de travail. Le mécanisme de verrouillage des boîtiers peut être composé d'un crochet solidaire d'un des boîtiers et pouvant pénétrer dans une lumière de l'autre boîtier. Une commande de déverrouillage (de type interrupteur) située sur l'un des boîtiers et reliée au crochet permet de déverrouiller les deux boîtiers et de les faire pivoter de façon à plier l'ensemble. Une fois le pliage des tubes amorcé, les tubes enrouleurs 111A, 112A sont bloqués en rotation.

### 6.5 Exemple de moyens d'amorçage de la solidarisation pour ce premier mode de réalisation

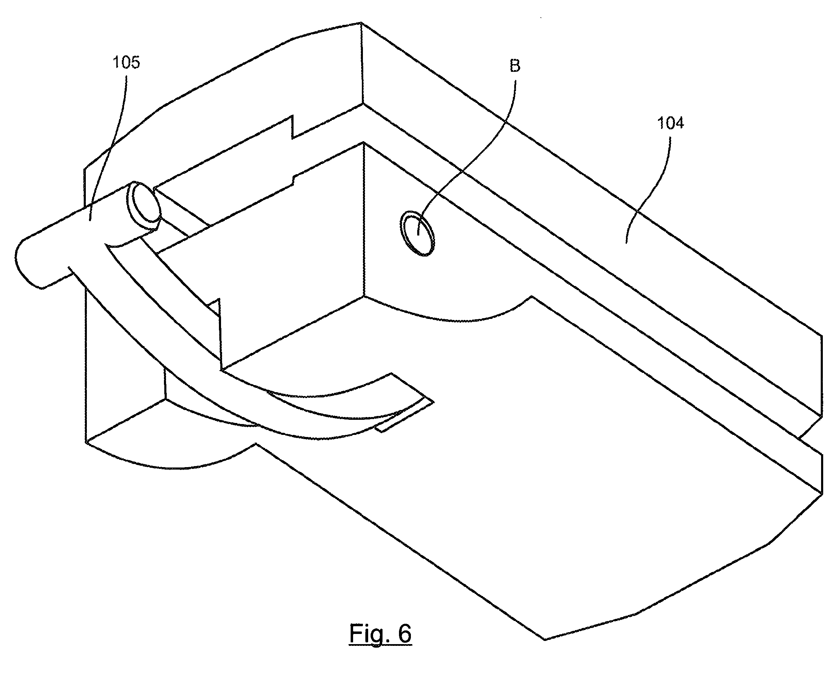

Les figures 6 à 12 illustrent un exemple de moyens d'amorçage de la solidarisation des toiles pour le dispositif décrit ci-dessus. Ces moyens comprennent un curseur 108 mobile et un élément d'arrêt 104, ce dernier étant représenté en détail sur la figure 6.

L'élément d'arrêt 104 est monté fixe par rapport à une des toiles 121 et est solidaire d'une extrémité de l'un des moyens de solidarisation 141 (montés sur le bord de la toile 121). L'élément d'arrêt 104 comprend des moyens de connexion mobiles 105 montés pivotant autour d'un axe B et deux canaux de guidage permettant le passage des rangées de dents des moyens de solidarisation 141 et 142. L'élément d'arrêt 104 peut ainsi être percé de deux trous débouchant axialement alignés dans lesquels deux pattes des moyens de connexion mobiles 105 peuvent se loger.

Le curseur 108 comprend également deux canaux de guidage permettant le passage des rangées de dents des moyens de solidarisation 141 et 142, des moyens d'actionnement (non représenté) et des moyens de libération de la rotation des tubes enrouleurs sous la forme d'une tige ou d'un doigt 109.

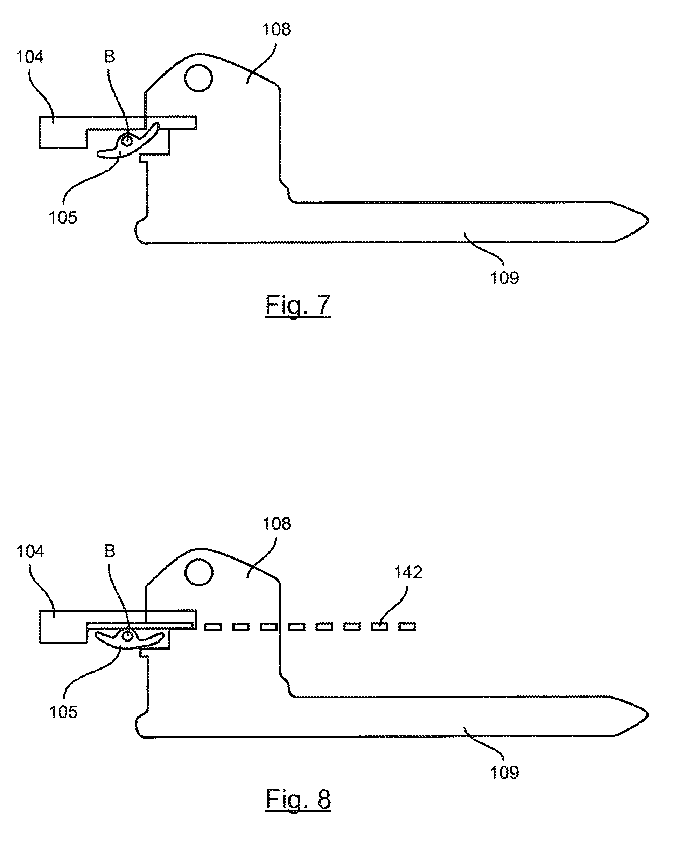

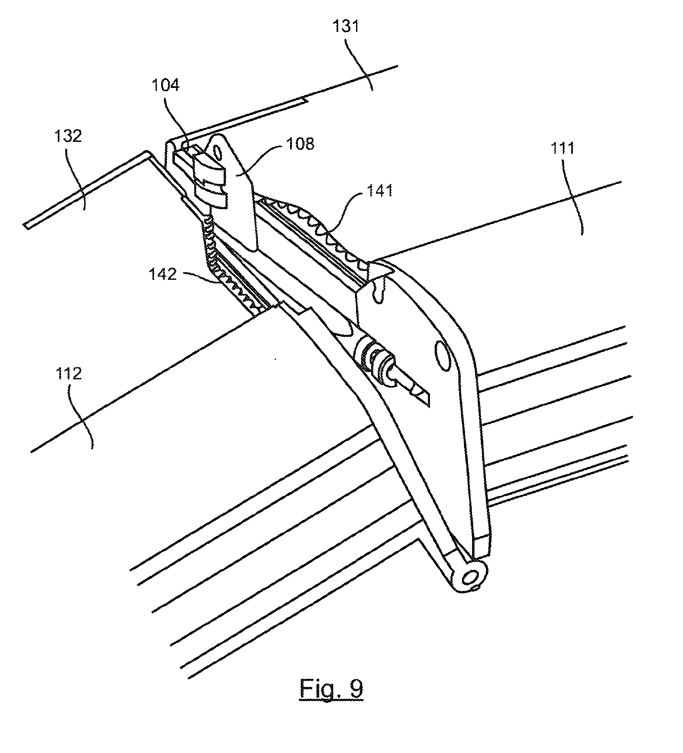

Comme illustré schématiquement sur la figure 7, et également sur la figure 9 où le dispositif d'occultation est partiellement plié, le curseur 108 peut coopérer avec l'élément d'arrêt 104 par l'intermédiaire des moyens de connexion mobiles 105 dans la position inactive. Les moyens de connexion mobiles maintiennent alors le curseur 108 immobile par rapport à l'élément d'arrêt 104, de préférence en contact avec l'élément d'arrêt 104.

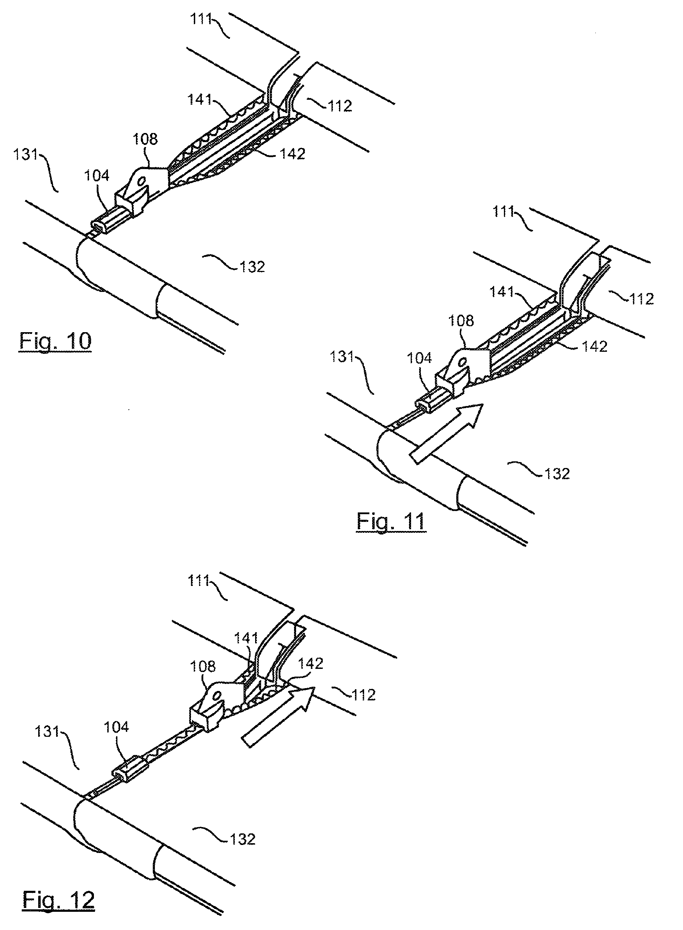

Quand les demi-cassettes 111, 112 sont dans l'alignement l'une de l'autre, comme représenté sur les figures 10 à 12, l'utilisateur peut amorcer la solidarisation des moyens de solidarisation 141 et 142 en introduisant une extrémité des moyens de solidarisation 142 dans un canal de guidage du curseur 108 puis dans le canal de guidage correspondant de l'élément d'arrêt 104. En conséquence, les moyens de connexion mobiles 105 pivotent sous la force de l'extrémité guidée des moyens de solidarisation 142 et libèrent le curseur 108 de l'élément d'arrêt 104, comme illustré sur la figure 8.

La translation du curseur 108 vers les demi-cassettes 111, 112 permet, comme souligné auparavant, d'initialiser la jonction des moyens de solidarisation 141, 142, comme illustré sur les figures 11 et 12.

Une fois en position de solidarisation, les moyens de verrouillage / déverrouillage (ou de déblocage, ou de débrayage) des tubes enrouleurs 111A, 112A sont déverrouillés par le doigt 109 du curseur 108 ce qui permet le déploiement des toiles. Le curseur 108 reste immobile par rapport aux tubes enrouleurs et assure la poursuite de la jonction progressive des toiles lorsque celles-ci sont déroulées.

Lors du repli, le curseur 108 assure la séparation des moyens de solidarisation 141, 142.

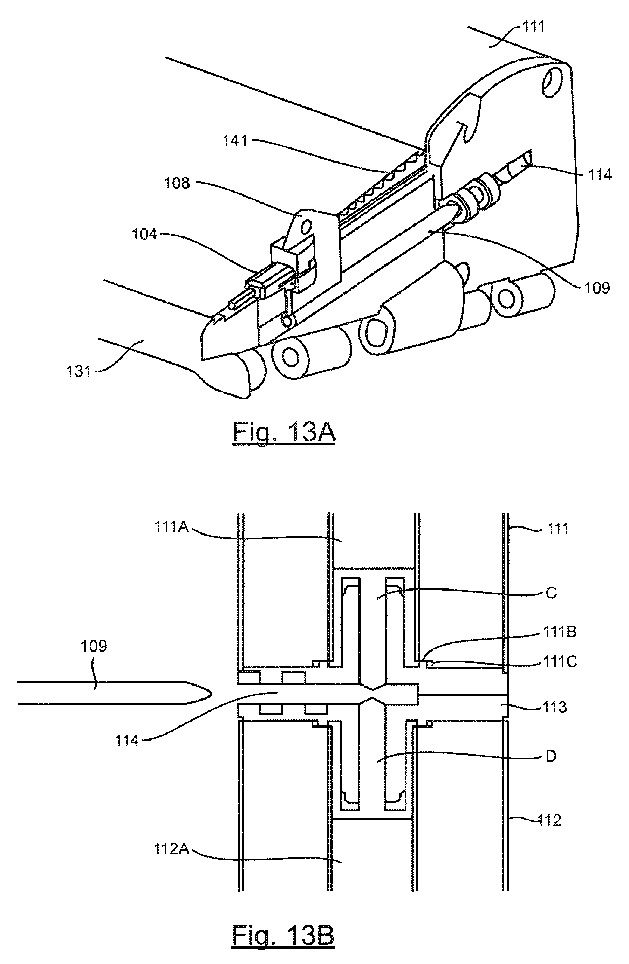

Dans un mode de réalisation avantageux, les toiles d'occultation 21 et 22 ne peuvent être solidarisées qu'une fois le déverrouillage des tubes enrouleurs 111A, 112A des demi-cassettes 111, 112 effectué. Ce déverrouillage est, dans un mode de réalisation illustré par les figures 13A à 16, assuré par le doigt/tige 109 (moyens de libération) du curseur 108.

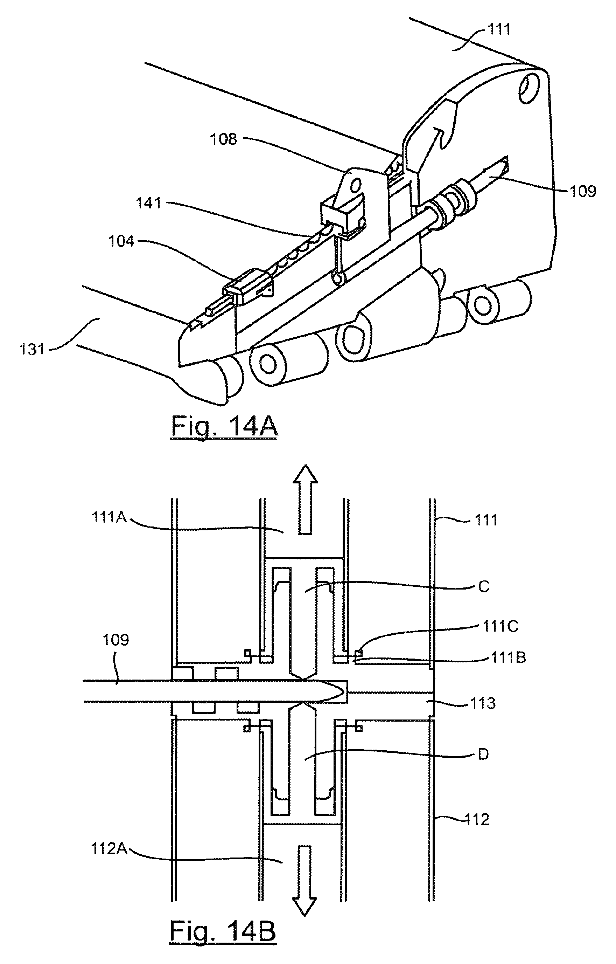

Dans un souci de clarté, les figures 13A, 14A, 15 et 16 illustrent uniquement le déverrouillage du tube enrouleur 111A de la demi-cassette 111 par le doigt 109. Il est cependant à noter que le même principe s'applique simultanément au tube enrouleur 112A de la demi-cassette 112, comme illustré sur les figures 13B et 14B.

Comme illustré sur les figures 13B et 14B, un élément C, D en forme de doigt/tige circulaire sensiblement parallèle à l'axe de rotation des tubes est solidaire de l'extrémité de chaque tube enrouleur 111A, 112A.

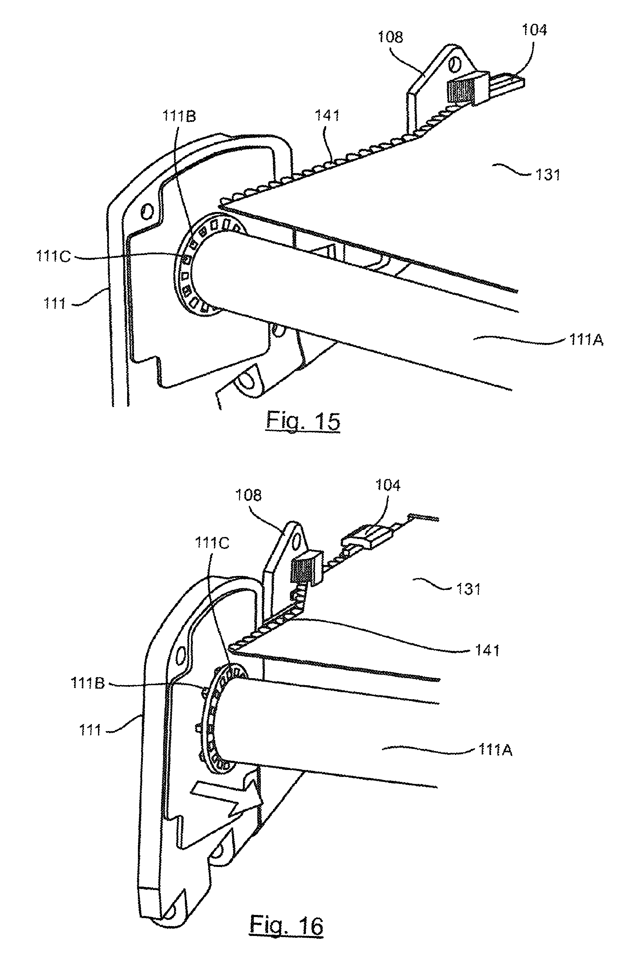

Dans la position du curseur 108 illustrée sur la figure 13A (correspondant aux figures 14A et 15), le doigt 109 est situé en retrait de la charnière 113. Les boîtiers sont en position de travail et les tubes enrouleurs sont verrouillés.

Des trous débouchant à l'extrémité de chaque boîtier 111, 112 sont prévus afin de permettre le passage des doigts C, D de manière à ce que leur extrémité respective soit positionnée dans un canal de guidage 114 de la charnière 113.

Lorsque le curseur 109 est déplacé en translation jusqu'à la position illustrée sur la figure 13B (correspondant à la figure 14B), le doigt 109 pénètre dans le canal de guidage 114 de la charnière 113 et agit sur les moyens de verrouillage des tubes enrouleurs 111A, 112A, provoquant ainsi le déverrouillage des tubes.

Plus précisément, et comme illustré figure 14B, le doigt 109 repousse les doigts C, D des tubes enrouleurs 111A, 112A vers l'intérieur des demi-cassettes, provoquant ainsi le décalage des tubes enrouleurs 111A, 112A à l'intérieur des demi-cassettes 111, parallèlement à leur axe de rotation 112 (comme illustré par les flèches de la figure 14B).

Les figures 15 et 16 montrent le tube enrouleur 111A respectivement dans une position verrouillée et dans une position déverrouillée, pour la position du curseur 108 des figures 13A et 14A (et par conséquent 13B et 14B).

En particulier, les moyens de verrouillage de la rotation du tube enrouleur 111A comprennent une première pièce de verrouillage 111C solidaire du tube enrouleur 111A qui est apte à venir en prise avec une seconde pièce de verrouillage 111B du boîtier 111, le tube enrouleur 111A étant mobile parallèlement à son axe de rotation.

La seconde pièce de verrouillage 111B comprend des éléments en forme de picots qui sont disposés circulairement de manière fixe à l'extrémité intérieure de la demi-cassette/boîtier 111. Ces picots sont, sur la figure 15, en prise avec des ouvertures (première pièce de verrouillage 111C) disposées circulairement à une extrémité du tube enrouleur 111 A.

Lorsque le curseur 109 est déplacé jusqu'à la position de la figure 16, il pénètre dans le canal de guidage 114 comme décrit précédemment et repousse le doigt C du tube enrouleur 111A à l'intérieur du boîtier 111. En conséquence, le tube enrouleur 111A est décalé parallèlement à son axe de rotation (flèche de la figure 16) ce qui désengage les ouvertures 111C des picots 111B.

Le tube enrouleur 111A est alors déverrouillé et libre en rotation. Le même principe de déverrouillage étant applicable pour le tube enrouleur 112A, les toiles enroulées sur les tubes 111A, 112A peuvent alors être déployées par l'utilisateur en tirant sur les barres de tirage 131, 132.Dans une variante de réalisation, les picots 111B peuvent être montés mobiles sur le boîtier 111 parallèlement à l'axe de rotation du tube enrouleur 111A. Le tube enrouleur 111A, et par conséquent les ouvertures 111C, sont dans ce cas montés fixe en translation. Lorsqu'il pénètre dans le canal de guidage 114, le doigt 109 agit sur les picots 111B de manière à les déplacer vers la charnière 113. Une fois les picots 111B désengagés des ouvertures 111C du tube enrouleur 111A, le tube enrouleur 111A (et le tube enrouleur 112A) est libéré en rotation.

### 6.6 Deuxième mode de réalisation

Dans une variante de réalisation, les moyens de libération de la rotation des tubes enrouleurs peuvent être portés par les boîtiers ou par les tubes enrouleurs, et permettent de déverrouiller le déploiement des toiles lorsque les boîtiers sont alignés, dans la position de travail.

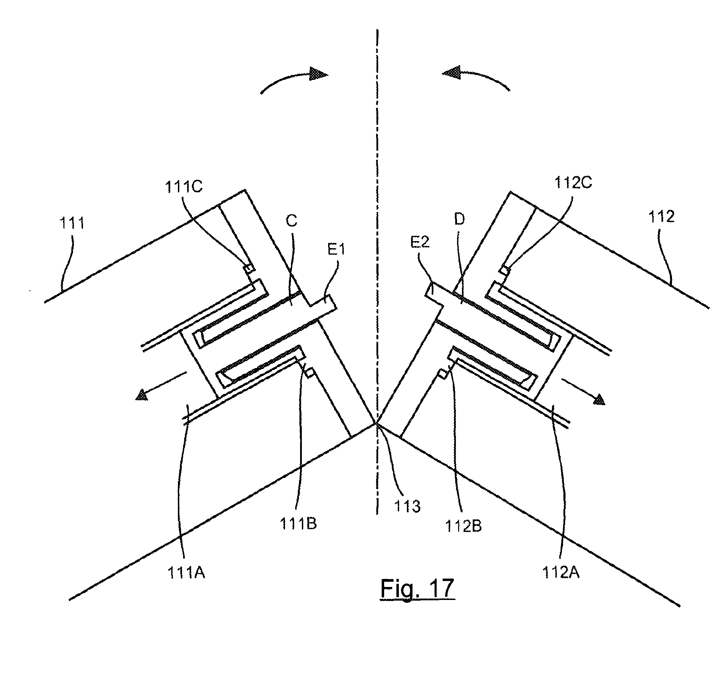

Dans le mode de réalisation représenté sur la figure 17, chaque doigt circulaire C, D solidaire de l'extrémité des tubes enrouleurs 111A, 112A comprend un ergot E1, E2 et un logement complémentaire dont les profils sont en forme de demi-cercle. Chaque logement est apte à recevoir l'ergot de l'autre tube enrouleur lorsque les boîtiers 111, 112 sont alignés.

Une ouverture ménagée dans l'extrémité des boîtiers 111, 112 permet le passage des doigts C, D afin que chaque ergot E1, E2 dépasse de l'extrémité du boîtier 111, 112, sans coopérer avec l'autre ergot, lorsque les boîtiers sont partiellement pliés (comme illustré sur la figure 17).

À mesure que les extrémités des boîtiers sont rapprochées dans le sens des flèches supérieures, l'ergot E1 du doigt C vient se loger dans le logement correspondant du doigt D et, de la même manière, l'ergot E2 du doigt D vient se loger dans le logement correspondant du doigt C. Les ergots E2, E1 décalent ensuite les doigts C et D respectivement, et par conséquent les tubes enrouleurs 111A, 112A, parallèlement à l'axe de rotation des tubes (flèches inférieures de la figure) jusqu'à ce que les ouvertures 111C, 112C des tubes se désengagent des picots 111B, 112B des boîtiers. Un tel désengagement est effectué lorsque les boîtiers 111, 112 sont sensiblement alignés en position de travail. Les tubes enrouleurs 111A, 112A sont alors libérés en rotation, ce qui permet le déploiement des stores.

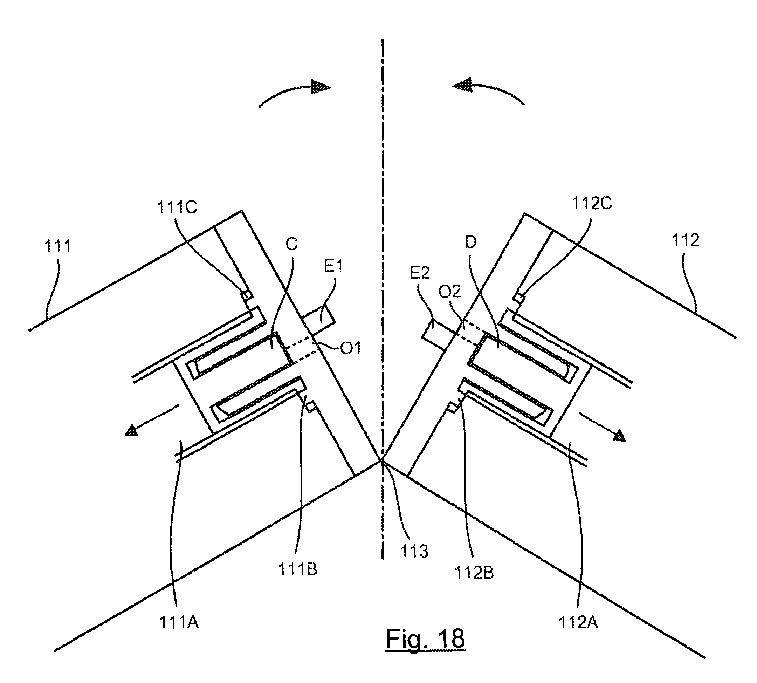

Dans une alternative représentée sur la figure 18, un ergot E1, E2 est solidaire de l'extrémité de chaque boîtier 111, 112. Chaque boîtier 111, 112 comprend en outre à son extrémité un trou débouchant O1, 02 apte à recevoir l'ergot E2, E1 de l'autre boîtier.

À mesure que les boîtiers 111, 112 sont rapprochés afin de les aligner en position de travail, les ergots E1, E2 pénètrent dans le trou débouchant O2, O1 de l'autre boîtier et poussent les extrémités C, D des tubes enrouleurs 111A, 112A parallèlement à l'axe de rotation des tubes dans la direction indiquée par les flèches inférieures. La libération en rotation des tubes 111A, 112A est effectuée lorsque les boîtiers 111, 112 sont sensiblement alignés, et que les ouvertures 111 C, 112C des tubes sont désengagées des picots 111 B, 112B des boîtiers.

### 6.7 Autres caractéristiques et avantages

Les modes de réalisation de l'invention décrits ci-dessus présentent le cas de cassettes de stores à enrouleurs pliables. Cependant l'invention peut également s'appliquer à tout autre cas de toiles d'occultation montées sur un ou plusieurs tubes enrouleurs, qui peuvent être alignés, décalés, ou former un angle entre eux, et dans lesquels il est utile de solidariser par leurs bords les toiles d'occultation. Plus de deux toiles peuvent ainsi être solidarisées les unes aux autres simultanément.

Par ailleurs, le mécanisme décrit, et notamment les moyens de passage de la position inactive à la position de solidarisation peuvent être adaptés en fonction des besoins et des applications.

Le dispositif de l'invention peut en effet être adapté pour des cache-bagages, mais également des coupe-vents (partie horizontale et/ou partie verticale), des stores d'occultation d'une surface vitrée, des stores extérieurs de protection contre le soleil ou le gel,...

Les moyens de solidarisation et les moyens de jonction peuvent également former une fermeture semblable à celles utilisées pour la fermeture de sachets plastique (de congélation par exemple), et connues notamment sous la marque déposée « minigrip ». Bien entendu, les moyens de solidarisation et les moyens de jonction peuvent également former tout autre moyen de fermeture du même type ou ayant les mêmes effets de solidarisation et de désolidarisation progressives, lors du déploiement ou du repli respectivement.

Plus généralement, l'invention peut également s'appliquer aux dispositifs ne prévoyant pas de moyens de solidarisation des toiles.

## Revendications

1. Dispositif d'occultation d'une surface d'un véhicule automobile, comprenant deux toiles d'occultation (21, 22) montées chacune sur un tube enrouleur (111A, 112A) porté par un boîtier (11, 12), lesdits boîtiers (11, 12) étant articulés de façon à prendre au moins deux positions :
- une position de rangement, dans laquelle lesdits boîtiers (11, 12) sont repliés l'un contre l'autre, lesdits tubes enrouleurs (111A, 112A) définissant un angle de l'ordre de 0° ; et
- une position de travail, dans laquelle lesdits tubes enrouleurs (111A, 112A) sont sensiblement alignés, définissant un angle de l'ordre de 180°,
**caractérisé en ce qu'**il comprend des moyens de verrouillage (111B, 111C) de la rotation desdits tubes enrouleurs (111A, 112A), bloquant la rotation desdits tubes enrouleurs (111A, 112A) lorsque le dispositif est dans ladite position de rangement, et des moyens de libération (9) agissant sur lesdits moyens de verrouillage (111B, 111C) pour permettre la rotation desdits tubes enrouleurs (111A, 112A), actionnés ou actionnables lorsque ledit dispositif est dans ladite position de travail.

2. Dispositif d'occultation selon la revendication 1, **caractérisé en ce que** lesdits moyens de verrouillage (111B, 111C) comprennent, pour chacun desdits tubes enrouleurs (111A, 112A), au moins une première pièce de verrouillage (111C) solidaire dudit tube enrouleur (111A, 112A), apte à venir en prise avec une seconde pièce (111B) solidaire dudit boîtier (11, 12).

3. Dispositif d'occultation selon la revendication 2, **caractérisé en ce que** lesdits moyens de libération (9) agissent sur ladite première (111C) ou ladite seconde pièce (111B) de verrouillage, de façon à la décaler parallèlement à l'axe de rotation dudit tube enrouleur (111A, 112A).

4. Dispositif d'occultation selon la revendication 3, **caractérisé en ce que** ladite seconde pièce (111B) est montée fixe sur ledit boîtier (11, 12), lesdits tubes enrouleurs (111 A, 112A) étant mobiles parallèlement à leur axe de rotation.

5. Dispositif d'occultation selon la revendication 3, **caractérisé en ce que** ladite seconde pièce (111B) est montée mobile sur ledit boîtier (11, 12).

6. Dispositif d'occultation selon l'une quelconque des revendications 1 à 5, **caractérisé en ce que** lesdites toiles (21, 22) portent des moyens de solidarisation (41, 42) complémentaires susceptibles de se solidariser l'un à l'autre pour assurer une jonction progressive desdites toiles (21, 22) lors de leur déploiement.

7. Dispositif d'occultation selon la revendication 6, **caractérisé en ce que** lesdits moyens de solidarisation (41, 42) appartiennent au groupe comprenant :
- les fermetures à glissière ;
- les boutons pression ;
- les moyens aimantés.

8. Dispositif d'occultation selon l'une quelconque des revendications 6 et 7, **caractérisé en ce qu'**il comprend des moyens d'initialisation (8) de la solidarisation desdites toiles (21, 22), et **en ce que** lesdits moyens d'initialisation (8) coopèrent avec lesdits moyens de libération (9), de façon que l'initialisation de la solidarisation assure le déverrouillage de la rotation desdits tubes enrouleurs (111A, 112A).

9. Dispositif d'occultation selon les revendications 7 et 8, **caractérisé en ce que** lesdits moyens de solidarisation (41, 42) comprennent une fermeture à glissière et **en ce que** lesdits moyens d'initialisation comprennent un curseur (8) porté par l'une desdites toiles (21, 22) ou une barre de tirage (31, 32) solidaire de celle-ci, et mobile entre une position inactive et une position de solidarisation, lesdits moyens de jonction (6) assurant :
- une phase d'initialisation de la jonction, assurée par le déplacement de ladite position inactive vers ladite position de solidarisation, et
- une phase de poursuite de la jonction, assurée par le déroulement desdites toiles (21, 22), ledit curseur (8) restant immobile par rapport au(x)dit(s) tube(s) enrouleur(s) (111A, 112A), dans ladite position de solidarisation.

10. Dispositif d'occultation selon la revendication 9, **caractérisé en ce que** lesdits moyens de jonction (6) portent au moins une tige, formant lesdits moyens de libération (9).

11. Dispositif d'occultation selon l'une quelconque des revendications 1 à 7, **caractérisé en ce que** lesdits moyens de libération (9) sont portés par lesdits boîtiers (11, 12), et assurent le déverrouillage de moyens de verrouillage dès que lesdits boîtiers (11, 12) sont dans ladite position de travail.

12. Dispositif d'occultation selon l'une quelconque des revendications 1 à 11, **caractérisé en ce qu'**il appartient au groupe comprenant :
- les cache-bagages ;
- les stores de compartimentage de coffre ;
- les stores d'occultation de pavillon ;
- les stores d'occultation de lunette arrière ;
- les stores d'occultation de pare-brise ;
- les stores de protection extérieure ou intérieure de pare-brise ;
- les dispositifs coupe-vent.

13. Véhicule automobile **caractérisé en ce qu'**il comprend au moins un dispositif d'occultation selon l'une quelconque des revendications 1 à 12.

## Claims

1. Device for screening-off a surface of a motor vehicle, said device comprising two screening-off sheets (21, 22) each mounted on a roller tube (111A, 112A) carried by a casing (11, 12), the said casings (11, 12) being articulated in such a way as to assume at least two positions:
- a stowing-away position, in which the said casings (11, 12) are folded up, one against the other, the said roller tubes (111A, 112A) defining an angle of the order of 0°; and
- a working position, in which the said roller tubes (111A, 112A) are substantially in alignment, defining an angle of the order of 180°,
**characterised in that** said device comprises means (111B, 111C) for locking the rotation of the said roller tubes (111A, 112A), which means block the rotation of the said roller tubes (111A, 112A) when the device is in the stowing-away position, and releasing means (9) which act upon the said locking means (111B, 111C) in order to permit the rotation of the said roller tubes (111A, 112A) and which are, or can be, activated when the said device is in the said working position.

2. Screening-off device according to claim 1, **characterised in that** the said locking means (111B, 111C) comprise, for each of the said roller tubes (111A, 112A), at least one first locking piece (111C) which is integral with the said roller tube (111A, 112A) and is capable of coming into engagement with a second piece (111B) which is integral with the said casing (11, 12).

3. Screening-off device according to claim 2, **characterised in that** the said releasing means (9) act upon the said first locking piece (111C) or the said second locking piece (111B) in such a way as to offset it parallel to the axis of rotation of the said roller tube (111A, 112A).

4. Screening-off device according to claim 3, **characterised in that** the said second piece (111B) is mounted in a fixed manner on the said casing (11, 12), the said roller tubes (111A, 112A) being movable parallel to their axis of rotation.

5. Screening-off device according to claim 3, **characterised in that** the said second piece (111B) is mounted in a movable manner on the said casing (11, 12).

6. Screening-off device according to any of claims 1 to 5, **characterised in that** the said sheets (21, 22) carry complementary fastening means (41, 42) which are capable of being fastened to one another in order to bring about progressive joining-together of the said sheets (21, 22) when they are deployed.

7. Screening-off device according to claim 6, **characterised in that** the said fastening means (41, 42) belong to the group comprising:
- slide-type fasteners;
- press studs;
- magnetic means.

8. Screening-off device according either of claims 6 and 7, **characterised in that** it comprises means (8) for initialising the fastening of the said sheets (21, 22), and **in that** the said initialising means (8) cooperate with the said releasing means (9) in such a way that initialisation of the fastening operation brings about unlocking of the rotation of the said roller tubes (111A, 112A).

9. Screening-off device according to claims 7 and 8, **characterised in that** the said fastening means (41, 42) comprise a slide-type fastener, and **in that** the said initialising means comprise a cursor (8) which is carried by one of the said sheets (21, 22) or a drawbar (31, 32) which is integral with the latter, and which can be moved between an inoperative position and a fastening position, the said joining-together means (6) bringing about:
- a phase for initialising the joining-together operation, which is brought about by displacement from the said inoperative position towards the said fastening position; and
- a phase for continuing the joining-together operation, which is brought about by the unrolling of the said sheets (21 22), the said cursor (8) remaining immobile in relation to the said roller tube(s) (111A, 112A), in the said fastening position.

10. Screening-off device according to claim 9, **characterised in that** the said joining-together means (6) carry at least one rod which constitutes the said releasing means (9).

11. Screening-off device according any of claims 1 to 7, **characterised in that** the said releasing means (9) are carried by the said casings (11, 12), and bring about the unlocking of locking means as soon as the said casings (11, 12) are in the said working position.

12. Screening-off device according to any of claims 1 to 11, **characterised in that** it belongs to the group comprising:
- luggage-concealing devices;
- blinds for partitioning a car boot;
- blinds for screening-off a car roof;
- blinds for screening-off a rear window;
- blinds for screening-off a windscreen;
- blinds for the external or internal protection of a windscreen;
- wind-deflecting devices.

13. Motor vehicle, **characterised in that** it comprises at least one screening-off device according to any of claims 1 to 12.

## Patentansprüche

1. Abdeckvorrichtung für eine Fläche eines Kraftfahrzeuges, die zwei Beschattungsstoffbahnen (21, 22) umfaßt, die jeweils auf einem Aufrollrohr (111A, 112A) angeordnet sind, das von einem Gehäuse (11, 12) getragen wird, wobei die Gehäuse (11, 12) verschwenkbar sind, so daß sie mindestens zwei Stellungen einnehmen können :
• eine Aufräumstellung, in der die Gehäuse (11, 12) gegeneinander zusammengefaltet sind, wobei die Aufrollrohre (111A, 112A) einen Winkel in der Größenordnung von 0° einnehmen ; und
• eine Arbeitsstellung, in der die Aufrollrohre (111A, 112A) in Wesentlichen linear angeordnet sind, wobei sie einen Winkel in der Größenordnung von 180° einnehmen ; und
**dadurch gekennzeichnet, daß** sie Verriegelungsmittel (111B, 111C) für das Verschwenken der Aufrollrohre (111A, 112A) aufweist, die das Verschwenken der Aufrollrohre (111A, 112A) blockieren, wenn die Vorrichtung sich in der Aufräumstellung befindet sowie Lösemittel (9), die auf die Verriegelungsmittel (111B, 111C) einwirken, um das Verschwenken der betätigten oder betätigbaren Aufrollrohre (111A, 112A) zu ermöglichen, wenn die Vorrichtung sich in der Arbeitsstellung befindet.

2. Abdeckvorrichtung gemäß Anspruch 1, **dadurch gekennzeichnet, daß** die Verriegelungsmittel (111B, 111C) für jedes der Aufrollrohre (111A, 112A) mindestens ein erstes Verriegelungsteil (111C), das mit dem Aufrollrohr (111A, 112A) verbunden ist, umfassen, welches so ausgebildet ist, daß es in Eingriff mit einem mit dem Gehäuse (11, 12) verbundenen zweiten Verriegelungsteil (111B) gelangen kann.

3. Abdeckvorrichtung gemäß Anspruch 2, **dadurch gekennzeichnet, daß** die Lösemittel (9) auf das erste (111C) oder das zweite Verriegelungsteil (111B) einwirken, um es parallel zur Schwenkachse des Aufrollrohres (111A, 112A) zu verschieben.

4. Abdeckvorrichtung gemäß Anspruch 3, **dadurch gekennzeichnet, daß** das zweite Verriegelungsteil (111B) an dem Gehäuse (11, 12) befestigt ist, wobei die Aufrollrohre (111A, 112A) zu ihrer Schwenkachse beweglich sind.

5. Abdeckvorrichtung gemäß Anspruch 3, **dadurch gekennzeichnet, daß** das zweite Verriegelungsteil (111B) beweglich an dem Gehäuse (11, 12) angeordnet ist.

6. Abdeckvorrichtung gemäß einem der Ansprüche 1 bis 5, **dadurch gekennzeichnet, daß** die Stoffbahnen (21, 22) komplementäre Verbindungsmittel (41, 42) aufweisen, die miteinander verbindbar sind, um eine zunehmende Verbindung zwischen den Stoffbahnen (21, 22) während ihres Aufspannens herzustellen.

7. Abdeckvorrichtung gemäß Anspruch 6, **dadurch gekennzeichnet, daß** die Verbindungsmittel (41, 42) zu der Gruppe umfassend
• Reißverschlüsse,
• Druckknöpfe;
• Magnetische Verbindungsmittel
gehören.

8. Abdeckvorrichtung gemäß einem der Ansprüche 6 oder 7, **dadurch gekennzeichnet, daß** sie Initialisierungsmittel (8) zum Initialisieren des Verbindens der beiden Stoffbahnen (21, 22) aufweist und daß die Initialisierungsmittel (8) mit den Lösemitteln (9) zusammenwirken, so daß das Initialisieren der Verbindung das Verschwenken der Aufrollrohre (111A, 112A) freigibt.

9. Abdeckvorrichtung gemäß Anspruch 7 oder 8, **dadurch gekennzeichnet, daß** die Verbindungsmittel (41, 42) einen Reißverschluß und die Initialisierungsmittel einen Schieber (8) umfassen, der von einer der beiden Stoffbahnen (21, 22) getragen wird oder eine mit dieser verbundene Zugstange (31, 32) aufweist, die zwischen einer inaktiven und einer Befestigungsstellung beweglich sind, wobei die Verbindungsmittel (6)
• eine Verbindungsinitialisierungsphase, die durch das Bewegen von der inaktiven in die Verbindungsstellung erreicht wird, und
• eine Verbindungsfortftihrungsphase, die durch das Abrollen der Stoffbahnen (21, 22) erreicht wird, wobei der Schieber (8) relativ zu dem/den Aufrollrohr(en) in der Befestigungsstellung unbeweglich bleibt ermöglichen.

10. Abdeckvorrichtung gemäß Anspruch 9, **dadurch gekennzeichnet, daß** die Verbindungsmittel (6) wenigstens eine Stange tragen, die die Lösemittel (9) bildet.

11. Abdeckvorrichtung gemäß einem der Patentansprüche 1 bis 7, **dadurch gekennzeichnet, daß** die Lösemittel (9) von den Gehäusen (11, 12) getragen werden und das Lösen der Verriegelungsmittel ermöglichen, sobald die Gehäuse (11, 12) sich in der Arbeitsstellung befinden.

12. Abdeckvorrichtung gemäß einem der Ansprüche 1 bis 11, **dadurch gekennzeichnet, daß** sie zu der Gruppe umfassend
• Gepäckabdeckungen,
• Trennwände für den Kofferraum,
• Dachabdeckungen,
• Heckscheibenabdeckungen,
• Windschutzscheibenabdeckungen,
• Schutzvorrichtungen für die Außen- oder die Innenseite der Windschutzscheibe,
• Windschotts
gehört.

13. Kraftfahrzeug, **dadurch gekennzeichnet, daß** es wenigstens eine Abdeckvorrichtung gemäß einem der Ansprüche 1 bis 12 umfaßt.
